# EUROPEAN PATENT APPLICATION

(11) **EP 1 870 897 A2**
(43) Date of publication of application: **26.12.2007**
(21) Application number: 07000492.4
(22) Date of filing: 11.01.2007
(51) Int. Cl.: G11B 27/10

(54) **Method and apparatus for setting playlist for content files in mobile terminal**

(30) Priority: 22.06.2006 KR 20060056153
(71) Applicant: Samsung Electronics Co., Ltd., Suwon-si, Gyeonggi-Do (KR)
(72) Inventor: Lee, Seok Gon, Gyeongsangbuk-do (KR); Kim, Ki Tae, Gyeongsangbuk-do (KR); Kim, Soon Jin, Daegu Metropolitan City (KR); Son, Jae Gon, Daegu Metropolitan City (KR)
(74) Representative: Lang, Johannes

(57) **Abstract**

A method and apparatus for setting a playlist for content files stored in a mobile terminal that can reduce initial execution time associated with the content files by generating the playlist using header information extracted from the content files are provided. A specific content file is stored in a first memory unit and header information is extracted from the stored content file. A playlist is generated using the header information and the playlist is stored in a second memory unit. The playlist stored in the second memory unit is read when a command to execute the content file is received and the content file is executed. The method facilitates the execution of a content file without having to read header information and thus reduces the initial execution time associated therewith by generating the playlist using the header information for a packet in the content file before execution.

## Description

### BACKGROUND OF THE INVENTION

### Field of the Invention:

The present invention relates to a method and apparatus for setting a playlist for content files stored in a mobile terminal. More particularly, the present invention relates to a method and apparatus for setting a playlist for content files stored in a mobile terminal that can reduce initial execution time associated with the content files by generating the playlist using header information extracted from the content files.

### Description of the Related Art:

Recently emerging mobile terminals with data storage devices such as hard disk drives (HDDs) can offer storage capacity almost equivalent to that of general personal computers.

A mobile terminal has the ability to perform mobile communications, camera function, or the ability to display video and still images. To achieve these functions, the mobile terminal comprises a mobile phone, a digital camera, and a portable multimedia player (PMP), among others.

As described above, a mobile terminal provides a large storage capacity with the use of a data storage device such as a HDD. Thus, when a large number of content files such as multimedia files are stored in the large-capacity storage device, it is necessary to search for a specific content file and read header information such as file name, file location, and file extension from the content file whenever each content file is executed according to its execution command. This will increase initial execution time associated with the content file.

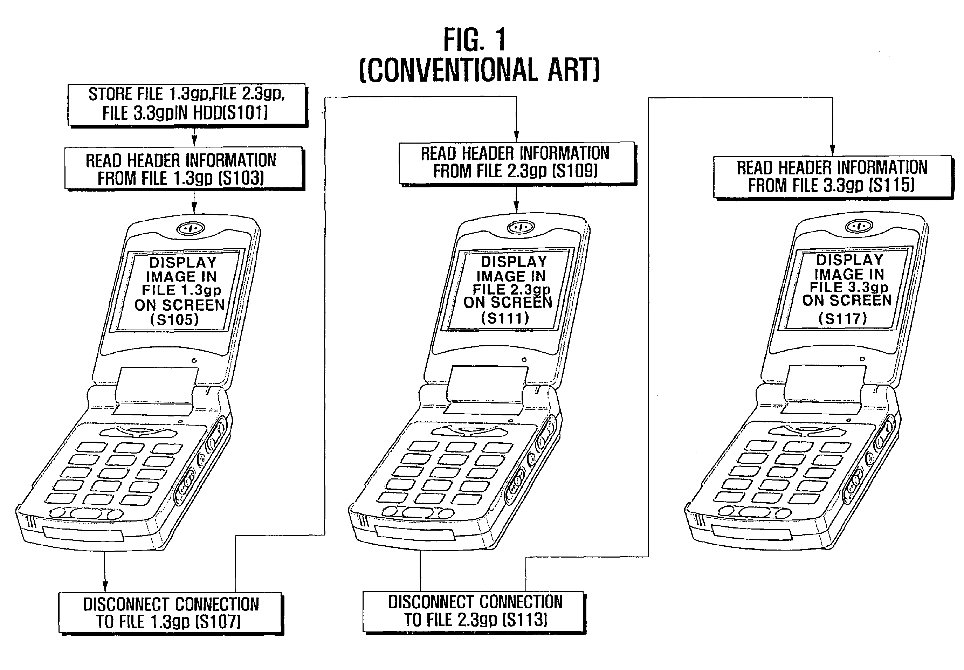

FIG. 1 is a diagram illustrating an example of a process of executing content files with a conventional mobile terminal. In a conventional mobile environment, the entire file must be downloaded before playback of multimedia data starts. In the case of large-sized multimedia data, an excessively large initial time delay cannot be avoided. To alleviate this problem, a streaming technique has been developed. Streaming refers to a technique in which files do not have to be downloaded in their entirety before playback begins. That is, a small portion of each file is downloaded at a time, thus reducing a delay in playback startup.

For streaming in a mobile environment, a content file (in particular, multimedia file) must be encoded in a streaming file format. In the mobile environment, the 3rd Generation Partnership Project (3GPP), and the 3rd Generation Partnership Project 2 (3GPP2) have been adopted as worldwide standards for high-speed mobile data delivery over 3G cellular networks. Files of 3GPP and 3GPP2 have filename extensions of .3gp and .3g2 respectively.

In FIG. 1, the filename extension .3gp is used as a file encoded for streaming in the mobile environment.

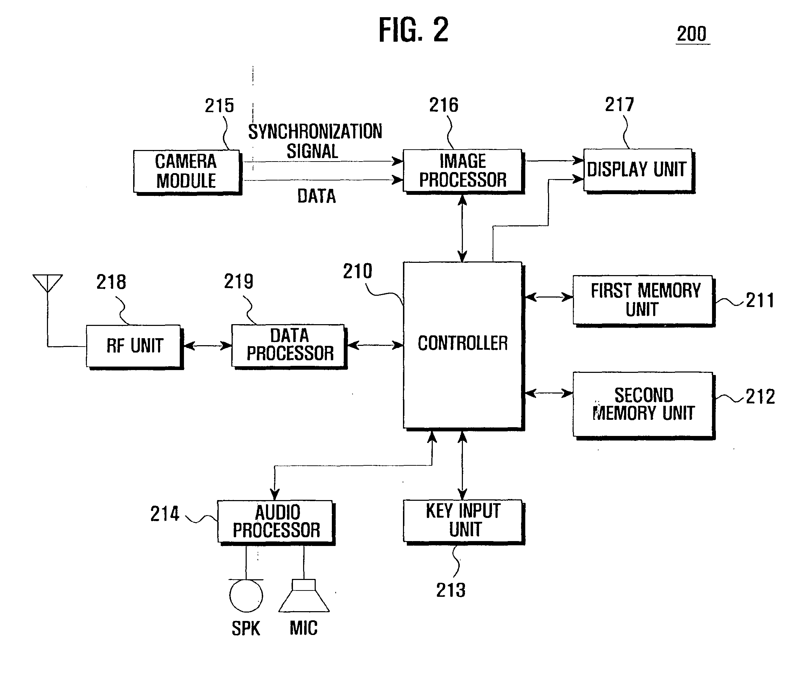

Referring to FIG. 2, content files file 1, file 2, and file 3 are stored in a memory unit (HDD) of the mobile terminal.

A header of a packet in each content file containing video or audio data specifies the name, location, and extension of the content file. Before execution of a specific content file, header information for a packet in the content file must be read from the memory unit (S103).

The content file is identified by reading the header information and executed content file (S 105).

In order to execute another content file, connection to the content file is disconnected (S107) and then header information for a packet in the other content file is read from the memory unit (S109 through S 117).

Therefore, because initial execution time (time necessary to read header information for a packet in a specific content file) is required for execution of a content file, a delay in execution of the content file occurs.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method for setting a playlist for content files stored in a mobile terminal that facilitates execution of the content files without having to read header information and thus reduces the initial execution time associated therewith

The object may be achieved by generating the playlist using the header information for a packet in each content file before execution.

In order to achieve the above object, according to an exemplary embodiment of the present invention, there is provided a method for setting a playlist for content files stored in a mobile terminal having first and second memory units. A specific content file is stored in the first memory unit and header information is extracted from the stored content file. A playlist is generated using the header information and the playlist is stored in the second memory unit. The playlist stored in the second memory unit is read when a command to execute the content file is received and the content file is executed.

In an exemplary implementation, the method further comprises modifying the playlist stored in the second memory unit when a command is received to delete or add a content file.

In an exemplary implementation, the first memory unit is a hard disk drive (HDD) or non-volatile memory and the second memory unit is a non-volatile memory or a volatile memory. The first and second memory units each define a memory region at a different location.

In an exemplary implementation, the content file is either an audio file, still image file, or multimedia video file.

In an exemplary implementation, in the step of extracting header information from the stored content file, the header information for each of the stored content files is retrieved.

In an exemplary implementation, the header information contains the name, location, and extension of the content file.

In an exemplary implementation, the playlist is read using random access to one or more content files therein. A region preventing the random access is set for a portion of the playlist corresponding to one or more selected content files. A track move function allowing a track move is set for a portion of the playlist corresponding to one or more selected content files. Alternatively, a region preventing a track move is set for a portion of the playlist corresponding to one or more selected content files.

In an exemplary implementation, a controller of the mobile terminal contains a random access program that allows random access to one or more content files in the playlist and a track move program that allows a track move for the content files and presets regions preventing random access and a track move depending on the type of the content files.

In an exemplary implementation, the random access method is a technique that allows access to header information for a packet in each content file in the playlist in random order regardless of the type of files and the order in which the files are generated.

In an exemplary implementation, the track move method is a technique that allows execution of another content file during execution of a specific content file.

### BRIEF DESCRIPTION OF THE DRAWINGS

The above and other exemplary objects, features and advantages of certain exemplary embodiments of the present invention will be more apparent from the following description taken in conjunction with the accompanying drawings, in which:
FIG. 1 is a diagram illustrating an example of a process of executing a content file with a conventional mobile terminal;
FIG. 2 illustrates the construction of a mobile terminal comprising first and second memory units according to an exemplary embodiment of the present invention;
FIG. 3 is a diagram illustrating an example of a process of executing a content file with a mobile terminal according to an exemplary embodiment of the present invention; and
FIG. 4 is a flowchart illustrating a method for setting a playlist for content files in a mobile terminal and a process of executing the content files according to an exemplary embodiment of the present invention.

Throughout the drawings, the same drawing reference numerals will be understood to refer to the same elements, features and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

FIG. 2 illustrates the construction of a mobile terminal comprising first and second memory units according to an exemplary embodiment of the present invention.

The mobile terminal has features such as the ability to perform mobile communications, camera function, and the ability to display video and still images. To achieve these functions, the mobile terminal comprises a mobile phone, a digital camera, a portable multimedia player (PMP), and other features.

Referring to FIG. 2, the mobile terminal 200 comprises a controller 210, first and second memory units 211 and 212, a key input unit 213, an audio processor 214, a camera module 215, an image processor 216, a display unit 217, a radio frequency (RF) unit 218, and a data processor 219.

The RF unit 218 performs wireless communications in the mobile terminal. The RF unit 218 comprises an RF transmitter that up-converts and amplifies the frequency of a signal being transmitted and an RF receiver that low-noise amplifies a signal being received and down-converts its frequency.

The data processor 219 comprises a transmitter encoding and modulating the signal transmitted by the RF transmitter and a receiver demodulating and decoding the signal received from the RF receiver. That is, the data processor 219 may comprise a modem and a codec. The codec comprises a data codec processing packet data and an audio codec processing audio signals.

The first memory unit 211 stores data, in particular, multimedia content files. The second memory unit 212 temporarily stores data created during the operation of the mobile terminal and a playlist generated using header information in the content files.

The first memory unit 211 is a non-volatile memory or hard disk drive (HDD). The second memory unit 212 comprises a non-volatile memory such as flash memory and a volatile memory such as random access memory (RAM). In an exemplary implementation, the second memory unit 212 may be embedded within the mobile terminal.

The content files may be either audio files, still image files or multimedia video files.

The audio processor 214 reproduces an audio signal output from the audio codec in the data processor 219 or inputs an audio signal generated by a microphone to the audio codec.

The camera module 215 comprises a camera lens for photographing an object, a camera sensor converting the photographed light signal into an electrical signal, and a signal processor for converting an analog image signal photographed by the camera sensor into digital data. In an exemplary implementation, the camera sensor and the signal processor may be a charge-coupled device (CCD) sensor and a digital signal processor (DSP), respectively. The camera sensor and the signal processor may be integrated with or separated from each other.

The controller 210 controls the operation of the mobile terminal. The controller 210 may comprise the data processor 219. The controller 210 is connected to the first memory unit 211, the second memory unit 212, the key input unit 213, the audio processor 214, the image processor 216, the display unit 217, and the data processor 219 to exchange and process data and establish a call.

The controller 210 extracts header information of content files stored in the first memory unit 211, creates a playlist for the content files using the header information, and stores the playlist in the second memory unit 212.

The controller 210 also contains a random access program that allows random access to one or more content files in the playlist and a track move program that allows a track move for the content files. Furthermore, the controller 210 presets regions preventing random access and a track move depending on the type of the content files.

The image processor 216 generates screen-image data for displaying an image signal output from the camera module 215. The image processor 216 processes the image signal on a frame-by-frame basis and outputs frame image data according to the properties and size.

Further, the image processor 216 comprises an image codec that compresses the frame image data displayed on the display unit 217 according to a preset format or decompresses compressed frame image data into the original frame image data. The image codec may be Joint Photographic Experts Group (JPEG) codec, Moving Picture Experts Group-4 (MPEG-4) codec, or wavelet codec. The image processor 216 also has an On-Screen Display (OSD) feature. The controller 210 controls the image processor 216 to output on-screen data according to the size of the displayed screen.

The display unit 217 displays the image signal output from the image processor 216 and data output from the controller 210 on the screen. The display unit 217 may be a liquid crystal display (LCD) panel or organic light-emitting diode (OLED) display panel. Preferably, the panel has a touch-screen function.

The key input unit 213 comprises keys for inputting telephone numbers containing numerals and characters and function keys for setting various functions. The key input unit 213 may further comprise shortcut keys associated with the function keys, such as '#' or'*'.

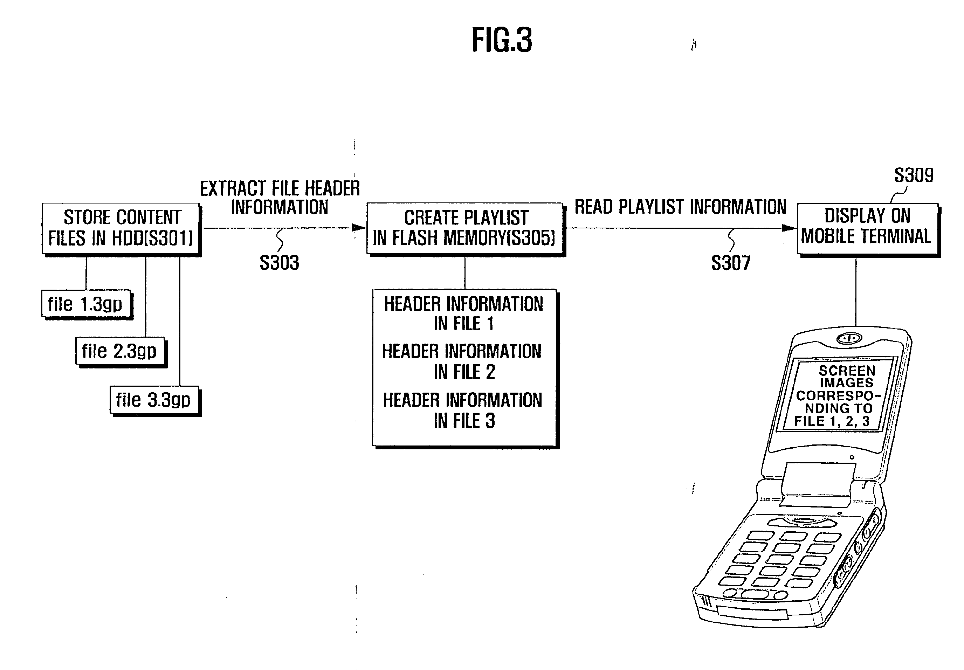

FIG. 3 is a diagram illustrating an example of a process of executing a content file with a mobile terminal according to an exemplary embodiment of the present invention. The process of executing a content file with the mobile terminal according to an exemplary embodiment of the present invention is described in brief with reference to FIGS. 2 and 3.

Referring to FIGS. 2 and 3, content files (for example, multimedia video files) with a file extension .3gp, i.e. file 1.3gp, file 2.3gp, and file 3.3gp, are stored in the first memory unit 211(for example that is HDD) of the mobile terminal (S301).

After the content files are stored in the first memory unit 211, the controller 210 extracts header information of each of the content files (S303), creates a playlist for the header information in the content files, and stores the playlist in the second memory unit 212 (for example that is flash memory) (S305).

Alternatively, the first memory unit 212 may be a flash memory. The first and second memory units 211 and 212 may have the same configuration except for each having a specific region defined as a memory region at different locations.

When a command to execute a specific content file is received, the controller 210 reads playlist information from the second memory unit 212 (S307) to search for and extract the content file stored in the first memory unit 211 and displays an image corresponding to the content file on the display unit 217 of the mobile terminal (S309).

According to the current exemplary embodiment of the present invention, the playlist is searched using random access to one or more content files, other than sequential access (in file number order).

The controller 210 sets regions preventing random access and a track move for a portion of the playlist corresponding to one or more selected content files. Alternatively, the controller 210 sets a track move function that allows a track move for a portion of the playlist corresponding to one or more selected content files.

The controller 210 comprises a random access program that allows random access to one or more content files in the playlist and a track move program that allows a track move for the content files. Further, the controller 210 presets regions preventing random access and a track move depending on the type of the content files.

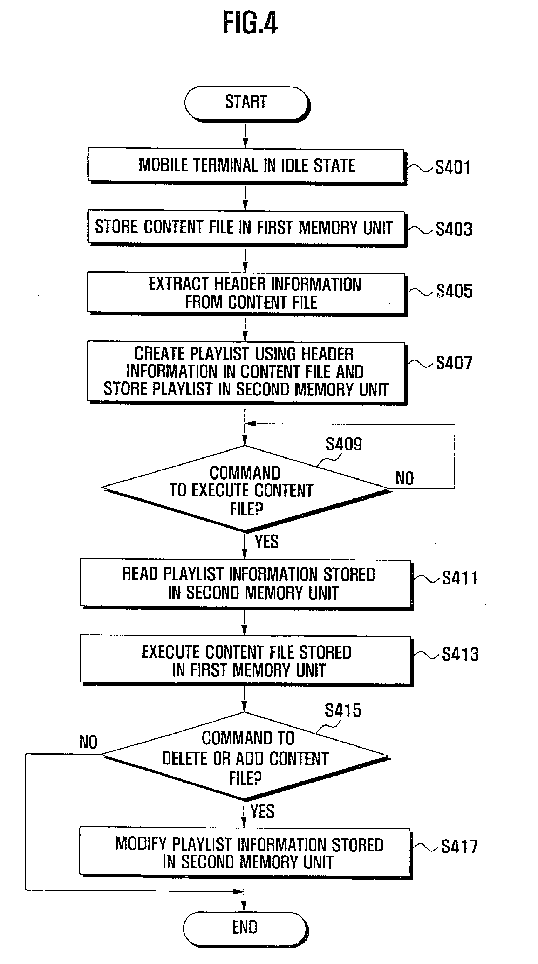

FIG. 4 is a flowchart illustrating a method for setting a playlist for content files in a mobile terminal and a process of executing the content files according to an exemplary embodiment of the present invention. The process of executing a content file with the mobile terminal is described in detail with reference to FIGS. 2 and 4.

Referring to FIGS. 2 and 4, the mobile terminal is in an idle state (S401).

Content files are stored in the first memory unit 211 of the mobile terminal (S403). The first memory unit 211 may be an HDD for a mobile terminal or a non-volatile memory such as a flash memory.

The content files may be either audio files, still image files, or multimedia video files.

The controller 210 extracts header information in the stored content files by retrieving header information for a packet in each content file (S405). The header information specifies the name, location, and extension of the content file containing image and audio data.

The controller 210 creates a playlist using the extracted header information and stores the playlist in the second memory unit 212 (S407).

The second memory unit 212 may comprise a non-volatile memory such as a flash memory.

The use of a non-volatile memory for the second memory unit 212 eliminates the need to retrieve a specific content file stored in the first memory unit 211. Since the non-volatile memory retains the previously stored data even when the power is off, the header information for the specific file can be stably stored.

Next, the mobile terminal determines whether a command to execute a specific content is received (S409). A command may be input using a keypad in the key input unit 213 or an LCD touch screen in the display unit 217.

If a command to execute a specific content is received, the controller 210 reads a playlist from the volatile memory device such as RAM in the second memory unit 212 (S411). In particular, the playlist is extracted from the flash memory and stored in the RAM during the booting of the mobile terminal. The playlist stored in the RAM is then read and a specific content is executed. Because the header information associated with the content file stored in the first memory unit 211 has been stored in the playlist in the step S407, extraction of header information in order to read the header information for the specific file is not required before execution. Thus, initial execution time associated with the content file can be reduced.

The content file stored in the first memory unit 211 is then executed (S413).

As described above, the method for executing a content file with a mobile terminal, according to an exemplary embodiment of the present invention, eliminates the step of checking header information for a content file stored in the first memory unit 211, thereby eliminating a time delay introduced by reading header information containing file name, file location, and file extension, among others when a command to execute the content file is input. Thus, the method can reduce the initial execution time associated with the content file.

The mobile terminal determines whether a command is received to delete or add a specific content file stored in the first memory unit 211 (S415).

If a command to delete or store the specific content file is received, the playlist is modified according to the command (S417).

In an exemplary implementation, if a command is received to delete the content file, the content file is deleted from the first memory unit 211 and header information for the content file is removed from the playlist stored in the second memory unit 212.

If a command is received to add the content file, the content file is stored in the first memory unit 211, header information for a packet in the stored content file, such as file name, file location, and file extension, is extracted, and the header information is added to the playlist stored in the second memory unit 212.

By generating a playlist using the header information for a packet in each content file stored in a mobile terminal before execution, the content file can be executed without having to read header information. This reduces initial execution time associated with the content file.

The present invention can also be embodied as computer readable codes on a computer readable recording medium. The computer readable recording medium is any data storage device that can store programs or data which can be thereafter read by a computer system. Examples of the computer readable recording medium include read-only memory (ROM), random-access memory (RAM), CD-ROMs, magnetic tapes, hard disks, floppy disks, flash memory, and optical data storage devices, among others. The computer readable recording medium can also be distributed over network-coupled computer systems so that the computer-readable code is stored and executed in a distributed fashion. Also, functional programs, codes and code segments for accomplishing the present invention can be easily construed as within the scope of the invention by programmers skilled in the art to which the present invention pertains.

While the present invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for setting a playlist for content files stored in a mobile terminal comprising first and second memory units, the method comprising:
storing a specific content file in the first memory unit;
extracting header information from the stored content file;
generating a playlist using the header information and storing the playlist in the second memory unit;
reading the playlist stored in the second memory unit when a command to execute the content file is received; and
executing the content file.

2. The method of claim 1, further comprising modifying the playlist stored in the second memory unit when a command is received to delete or add a content file.

3. The method of claim 1, wherein the first memory unit comprises at least one of a hard disk drive (HDD) and a non-volatile memory and the second memory unit comprises at least one of a non-volatile memory and a volatile memory.

4. The method of claim 3, wherein the first and second memory units each define a memory region at a different location.

5. The method of claim 1, wherein the content file comprises at least one of an audio file, still image file and a multimedia video file.

6. The method of claim 1, wherein the extracting of the header information from the stored content file comprises receiving the header information for each of the stored content files is retrieved.

7. The method of claim 6, wherein the header information comprises at least one of the name, location, and extension of the content file.

8. The method of claim 1, wherein the playlist is read using random access to at least one content file.

9. The method of claim 8, further comprising setting a region preventing the random access for a portion of the playlist corresponding to at least one selected content file.

10. The method of claim 1, further comprising setting a track move function allowing a track move for a portion of the playlist corresponding to at least one selected content file.

11. The method of claim 1,further comprising setting a region preventing a track move for a portion of the playlist corresponding to at least one selected content file.

12. The method of claim 1, wherein a controller of the mobile terminal contains a random access program that allows random access to at least one content file in the playlist and a track move program that allows a track move for the content files and presets regions preventing random access and a track move depending on the type of the content files.

13. A mobile communication terminal comprising:
a controller for controlling the operations of a mobile terminal;
a first memory unit for storing content files;
a second memory unit for temporarily storing at least one of a playlist and data;
a key input unit for inputting telephone numbers comprising numerals and characters and function keys for setting various functions;
an audio processor for reproducing an audio signal output from an audio codec in a data processor;
a camera module for photographing an object;
an image processor for generating screen-image data and for processing an image signal on a frame-by-frame basis; and
a display unit for displaying the image signal outpt from the image processor and data output from the controller.

14. The mobile communication terminal of claim 13, wherein the controller contains a random access program that allows random access to one or more content files in the playlist and a track move program that allows a track move for the content files.

15. The mobile communication terminal of claim 13, wherein the first memory unit comprises at least one of a non-volatile memory and a hard disk drive (HDD).

16. The mobile communication terminal of claim 13, wherein the second memory unit comprises at least one of a non-volatile memory such as a flash memory and a volatile memory such as random access memory (RAM).

17. The mobile communication terminal of claim 13, wherein the key input unit further comprises shortcut keys associated with function keys.

18. The mobile communication terminal of claim 13, wherein the image processor comprises an image codec for compressing a frame image data displayed on the display unit according to a preset format.

19. The mobile communication terminal of claim 18, wherein the image processor comprises the image codec for decompressing the compressed frame image data into original frame image data.

20. A computer readable medium having embodied thereon a computer readable program for setting a playlist for content files stored in a mobile terminal comprising first and second memory units, the method comprising:
storing a specific content file in the first memory unit;
extracting header information from the stored content file;
generating a playlist using the header information and storing the playlist in the second memory unit;
reading the playlist stored in the second memory unit when a command to execute the content file is received; and
executing the content file.
